**Europäisches Patentamt**

**European Patent Office**

**Office européen des brevets**

(19)

(11) Veröffentlichungsnummer : **0 343 423 B1**

## (12) EUROPÄISCHE PATENTSCHRIFT

(45) Veröffentlichungstag der Patentschrift :
**29.07.92 Patentblatt 92/31**

(51) Int. Cl.$^5$ : **B65G 53/46**

(21) Anmeldenummer : **89108310.7**

(22) Anmeldetag : **09.05.89**

(54) **Zellenradschleuse.**

(30) Priorität : **24.05.88 DE 3817533**

(43) Veröffentlichungstag der Anmeldung :
**29.11.89 Patentblatt 89/48**

(45) Bekanntmachung des Hinweises auf die
Patenterteilung :
**29.07.92 Patentblatt 92/31**

(84) Benannte Vertragsstaaten :
**AT BE CH DE ES FR IT LI NL SE**

(56) Entgegenhaltungen :
**DE-B- 1 278 352**
**US-A- 3 203 601**
**US-A- 4 231 495**

(73) Patentinhaber : **A.J. KÖLLEMANN GMBH**
**FÖRDER- UND VERFAHRENSTECHNIK**
**W-5488 Adenau (DE)**

(72) Erfinder : **Schmittinger, Günther**
**Am Mühlanger 7**
**W-8901 Gessertshausen (DE)**

(74) Vertreter : **Charrier, Rolf, Dipl.-Ing.**
**Postfach 260 Rehlingenstrasse 8**
**W-8900 Augsburg 31 (DE)**

## Beschreibung

Die Erfindung betrifft eine Zellenradschleuse nach dem Oberbegriff des Anspruches 1 (siehe z.B. DE-B-1 278 352).

Der Ausräumer bei einer solchen Zellenradschleuse hat die Aufgabe, bei nicht rieselfähigem Gut die Zellen des Zellenrads von dort haftendem Gut zu reinigen. Handelt es sich um Knollenprodukte bzw. Agglomerate, wie sie z.B. bei Sprühabsorbern für die Rauchgasentschwefelung entstehen, die in ein rieselfähiges Gut überführt werden sollen, dann werden diese Knollenprodukte nach passieren der Zellenradschleuse einem Knollenbrecher mit nachgeschalteten Sieben zugeführt, wo die Knollen zerkleinert werden und das zerkleinerte Gut anschließend in Kornfraktionen aufgeteilt wird. Knollenbrecher mit nachgeschalteten Sieben sind jedoch aufwendig.

Es besteht die Aufgabe, die Zellenradschleuse so auszubilden, daß an ihrem Auslaß ein rieselfähiges Gut erhalten wird, das beispielsweise pneumatisch förderbar ist.

Gelöst wird diese Aufgabe mit den kennzeichnenden Merkmalen des Anspruches 1. Vorteilhafte Ausgestaltungen sind den Unteransprüchen entnehmbar.

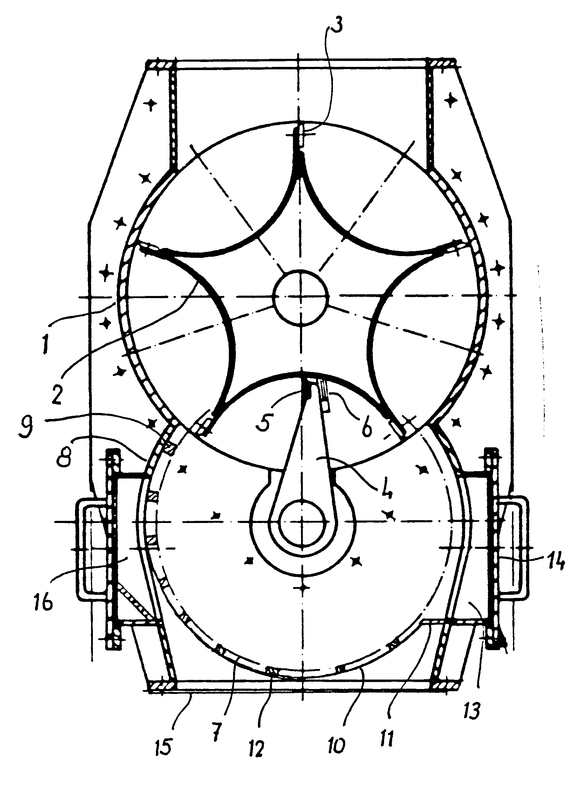

Ein Ausführungsbeispiel ist in der Zeichnung dargestellt, die einen Schnitt durch die Zellenradschleuse zeigt.

Im Gehäuse 1 der Zellenradschleuse ist das Zellenrad 2 drehbar gelagert, welches sich im Uhrzeigersinn dreht. An den Wandenden des Zellenrads sind in Drehrichtung gesehen an der Vorderseite Brecherleisten 3 angeordnet. Parallel zum Zellenrad 2 ist der Ausräumer 4 vorgesehen, der sich im Gegenuhrzeigersinn dreht. Dieser Ausräumer 4 weist in Drehrichtung gesehen an seiner Vorderseite ebenfalls eine Brecherleiste 5 auf. An seiner Rückseite ist eine Bürste 6 vorgesehen. Der von der Spitze der Brecherleiste 5 beschriebene Kreis ist mit 7 bezeichnet.

An der Stelle, wo der Ausräumer 4 in das Gehäuse 1 einläuft, ist an der Gehäusewand 8 eine erste Brecherleiste 9 angeordnet. An dieser Gehäusewand 8 ist ein kreisbogenförmiges Sieb 10 befestigt, das sich über etwa 180° bis zum Gehäuseflansch 11 erstreckt. Dieses Sieb 10 verläuft in geringfügigem Abstand zum Kreis 7. An seiner Innenseite sind weitere Brecherleisten 12 angeordnet. Anschließend an das Sieb 10 weist das Gehäuse eine Austragöffnung 13 auf, welche durch einen Schieber 14 verschlossen ist. An der Unterseite des unten offenen Gehäuses 1 ist ein weiteres Sieb 15 vorgesehen.

Knollenförmiges Gut, das von der Leiste 5 des Ausräumers 4 aus den Zellen des Zellenrads 2 ausgeräumt wird, wird anschließend zwischen den Brecherleisten 5, 9, 12 zerkleinert und mittels der Bürste 6 durch das Sieb 10 gedrückt. Nicht zerkleinerte Grobfraktion gelangt zur Austragsöffnung 13 und wird durch Betätigen des Schiebers 14 periodisch entnommen. Ein Teil der Grobfraktion wird zwischen den Brecherleisten 3, 5 zerkleinert. Sehr feines zerkleinertes Gut fällt durch die Siebe 10, 15, wobei das zum Sieb 10 feinere Sieb 15 gröbere Teilchen zurückhält, die aus dem Raum unterhalb des Siebes 10 seitlich abgeführt werden können.

Die Zerkleinerungs- und Siebarbeit kann durch Vibrationen unterstützt werden. Zu diesem Zweck ist ein nicht dargestellter Vibrator vorgesehen. Handelt es sich um feuchtes Gut, dann ist es möglich, über die der Öffnung 13 gegenüberliegende Öffnung 16 Heißluft zuzuführen.

Da zwischen dem Ein- und Auslaß der Zellenradschleuse eine Druckdifferenz herrschen kann, arbeitet die Vorrichtung staubdicht. Da die pro Zeiteinheit vom Zellenrad geförderte Gutmenge eine bekannte Größe ist, erfolgt eine dosierte Aufgabe des Guts auf das Sieb 10.

Die Vorrichtung kann so ausgebildet sein, daß beginnend von der Gehäusewand 8 bis zum Flansch 11 der Abstand zwischen dem Sieb 10 und dem Kreis 7 zunehmend geringer wird. Im Auslaufbereich vor dem Flansch 11 kann die Brecherleiste 5 das Sieb 10 direkt überstreichen. Anstelle eines einflügeligen Ausräumers 4 kann auch ein zweiflügeliger Ausräumer Verwendung finden.

## Patentansprüche

1. Zellenradschleuse mit einem unterhalb des Zellenrads angeordneten Ausräumer, der sich um eine zur Zellenradachse parallele Achse dreht und dabei mit seinem mindestens einen Räumflügel die ihm benachbarte Zelle des Zellenrads ausräumt, dadurch **gekennzeichnet**, daß unterhalb des Ausräumers 4 ein kreisbogenförmiges Sieb (10) angeordnet ist, das vom Räumflügel (4) überstrichen wird.

2. Zellenradschleuse nach Anspruch 1, dadurch **gekennzeichnet**, daß die Wandenden des Zellenrads (2) an der Seite, an der der Räumflügel (4) in die Zellen einläuft, durch Brecherleisten (3) verstärkt sind.

3. Zellenradschleuse nach Anspruch 1 oder 2, dadurch **gekennzeichnet**, daß auf dem Sieb (10) weitere Brecherleisten (12) angeordnet sind und zwischen dem Räumflügel (4) und dem Siebboden ein geringfügiger Abstand herrscht.

4. Zellenradschleuse nach einem der Ansprüche 1 bis 3, dadurch **gekennzeichnet**, daß unterhalb des Siebs (10) ein weiteres dazu feinmaschigeres Sieb (15) angeordnet ist.

5. Zellenradschleuse nach einem der Ansprüche 1 bis 4, dadurch **gekennzeichnet**, daß das Sieb (10) vibriert.

6. Zellenradschleuse nach Anspruch 3, dadurch **gekennzeichnet**, daß in Drehrichtung gesehen hinter dem Räumflügel (4) eine Bürste (6) angeordnet ist.

7. Zellenradschleuse nach einem der Ansprüche 1 bis 6, dadurch **gekennzeichnet**, daß das Sieb (10) eine Austragsöffnung für Grobteile und dazu benachbart das Gehäuse eine verschließbare Öffnung (13) aufweist.

8. Zellenradschleuse nach einem der Ansprüche 1 bis 7, dadurch **gekennzeichnet**, daß das Sieb (10) nach Art eines Scherengitters ausgebildet ist, bei dessen Längenänderung in Umfangsrichtung die Siebmaschenweite sich verändert.

9. Zellenradschleuse nach Anspruch 5, dadurch **gekennzeichnet**, daß im Schwingweg des Siebs (10) ein die Schwingungsamplitude begrenzender, einstellbarer Anschlag am Gehäuse (1) vorgesehen ist, gegen den das Sieb (10) anschlägt.

## Claims

1. A cellular-wheel lock with a cleanout element arranged below the cellular-wheel and rotating about an axis parallel to the cellular-wheel axis and thereby cleaning out the adjacent cell of the cellular-wheel with its at least one cleanout wing, **characterized** in that below the cleanout element (4) an arc-shaped sieve (10) is arranged which is swept by the cleanout wing (4).

2. A cellular-wheel lock according to claim 1, **characterized** in that the wall ends of the cellular-wheel (2) are reinforced by crushing bands (3) on the side where the cleanout wing (4) penetrates the cells.

3. A cellular-wheel lock according to claim 1 or 2, **characterized** in that further crushing bands (12) are arranged on the sieve (10) and a slight gap prevails between the cleanout wing (4) and the sieve bottom.

4. A cellular-wheel lock according to one of the claims 1 through 3, **characterized** in that below the sieve (10) a further, finer-meshed sieve (15) is arranged.

5. A cellular-wheel lock according to one of the claims 1 through 4, **characterized** in that the sieve (10) vibrates.

6. A cellular-wheel lock according to claim 3, **characterized** in that viewed in the direction of rotation a brush (6) is arranged behind the cleanout wing (4).

7. A cellular-wheel lock according to one of the claims 1 through 6, **characterized** in that the sieve (10) has a discharge opening for coarse material and the housing has a closeable opening (13) adjacent to it.

8. A cellular-wheel lock according to one of the claims 1 through 7, **characterized** in that the sieve (10) is constructed as a type of scissors grid on whose length alteration in the direction of the circumference the sieve mesh width changes.

9. A cellular-wheel lock according to claim 5, **characterized** in that in the oscillation path of the sieve (10) an adjustable stop limiting the oscillation amplitude is provided on the housing (1) and the sieve (10) strikes against it.

## Revendications

1. Sas à roue cellulaire, muni d'un nettoyeur qui est disposé au-dessous de la roue cellulaire et tourne autour d'un axe parallèle à l'axe de cette roue cellulaire en déblayant alors, par son ailette fouilleuse prévue au minimum, l'alvéole de ladite roue cellulaire qui lui est voisin, **caractérisé** par le fait qu'un tamis (10) en arc de cercle, situé au-dessous du nettoyeur (4), est balayé par l'ailette fouilleuse (4).

2. Sas à roue cellulaire selon la revendication 1, **caractérisé** par le fait que les extrémités de cloisonnement de la roue cellulaire (2) sont renforcées par des listels de concassage (3) du côté sur lequel l'ailette fouilleuse (4) pénètre dans les alvéoles.

3. Sas à roue cellulaire selon la revendication 1 ou 2, **caractérisé** par le fait que des listels supplémentaires de concassage (12) sont disposés sur le tamis (10), et une faible distance est réservée entre l'ailette fouilleuse (4) et le fond du tamis.

4. Sas à roue cellulaire selon l'une des revendications 1 à 3, **caractérisé** par le fait qu'un tamis supplémentaire (15), à maillage comparativement plus fin, est installé au-dessous du tamis (10).

5. Sas à roue cellulaire selon l'une des revendications 1 à 4, **caractérisé** par le fait que le tamis (10) vibre.

6. Sas à roue cellulaire selon la revendication 3, **caractérisé** par le fait qu'une brosse (6) est implantée

3

derrière l'ailette fouilleuse (4) en considérant le sens de rotation.

7. Sas à roue cellulaire selon l'une des revendications 1 à 6, **caractérisé** par le fait que le tamis (10) présente un orifice de décharge de particules grossières, au voisinage duquel le carter comporte un orifice obturable (13).

8. Sas à roue cellulaire selon l'une des revendications 1 à 7, **caractérisé** par le fait que le tamis (10) est réalisé à la manière d'un grillage à ciseaux, dont la largeur de mailles varie lors d'une variation de longueur dans le sens périphérique.

9. Sas à roue cellulaire selon la revendication 5, **caractérisé** par le fait qu'un taquet réglable limitant l'amplitude vibratoire est prévu sur le carter (1), sur le trajet de vibration du tamis (10), taquet contre lequel ledit tamis (10) vient buter.